# EUROPEAN PATENT SPECIFICATION

(11) **EP 3 342 649 B1**
(45) Date of publication and mention of the grant of the patent: **11.09.2019**
(21) Application number: 16207294.6
(22) Date of filing: 29.12.2016
(51) Int. Cl.: B60R 21/203, B60R 21/231, B60R 21/233

(54) **AIR-BAG CUSHION ASSEMBLY**
MONTAGE KISSEN
ASSEMBLAGE DE COUSSIN

(43) Date of publication of application: 04.07.2018
(73) Proprietor: Autoliv Development AB, 447 83 Vargarda (SE)
(72) Inventor: NEBEL, Raimund, DE-86836 Obermeitingen (DE); HARTMAN, Rainer, DE-81373 Munchen (DE); WEBER, Marcus, DE-97531 Untertheres (DE); BRUNNER, Patrick, DE-80538 Munchen (DE); ANAE, Gavin, South Ogden, UT 84403 (US)
(74) Representative: Beattie, Alex Thomas Stewart

(56) References cited:
- EP-A1- 0 657 329
- DE-A1- 2 248 393
- JP-A- H01 132 444

## Description

### Field of the invention

The invention is related to methods and apparatus in the field of air-bags for a vehicle. More particularly the invention is related to driver air-bags suitable for use with a non-circular steering wheel.

### Background to the invention

Typically a driver air-bag module is contained within a steering wheel hub and an air-bag cushion is deployed in the case of an accident. A typical steering wheel takes the form of an annular ring or rim. When the driver air-bag is deployed, an air-bag cushion is inflated and overlaps and expands beyond the steering wheel. The rim of the steering wheel provides a support or reaction force surface for the air-bag. The rim of the steering wheel helps to ensure that the air-bag is correctly deployed, e.g. to direct the cushion in the correct direction to properly cushion the driver during an accident.

Alternative steering wheel designs, which are becoming more common, present some problems to the typical air-bag arrangement. For example, a steering wheel may have a non-circular or non-annular shape, e.g. a C-shape or two laterally spaced arches, and thus there may be a gap in the rim, i.e. the steering wheel may be lacking a supportive rim or a portion of a supportive rim. Therefore a supportive reaction force surface is not provided in all directions around the steering wheel hub for the air-bag cushion when deployed.

When deployed, the air-bag cushion is configured to be placed in front of a vehicle occupant. Placement of the cushion is determined based on the presumed position of the occupant during normal operation of the vehicle. The air-bag cushion is designed to give optimal performance when the occupant is in a normal range of presumed positions. Thus, where there is an imbalance of the support provided by the steering wheel rim the normal position of the cushion may be shifted.

In some situations, the occupant may be 'out of position' and therefore, normal deployment of the air-bag position would not provide optimal performance.

Earlier attempts in bridging the gap in a rim of a steering wheel are disclosed in US7441799B2, DE102013011579A1 and US application number US15/178295 filed 9 June 2016.

EP0657329 (A1) discloses three air bag devices, including a device comprising a first air bag accommodated in a steering pad and receiving an occupant by the inflation and deployment during a collision, a second air bag seamed with a portion of the first air bag and being inflatable in a ring shape to cover a surface of a steering wheel facing to the occupant, and gas generating means connected to a gas inlet of the first air bag and to a gas inlet of the second air bag separately and being able to introduce gas to the both gas inlets respectively, the first air bag and the second air bag being inflated by introducing gas through the separate gas paths from the gas generating means at the same time.

### Summary of invention

Aspects of the invention are set out in the accompanying claims.

An aspect comprises an air-bag assembly comprising: an air-bag arrangement movable from a stored configuration to a deployed configuration, the air-bag arrangement comprising a first chamber and a second chamber, the second chamber being positioned adjacent to, or attached to, the first chamber and located to provide localised support to the first chamber, wherein, when in the stored configuration, the second chamber is folded outside of the first chamber; and at least one inflator coupled to the air-bag arrangement, wherein the at least one inflator is configured to inflate the air-bag arrangement when activated, and when in the inflated configuration, the second chamber is located against a back panel of the first chamber to provide a reaction force surface to assist in maintaining the first chamber in a desired position while the first chamber is deployed.

Optionally, the first chamber and the second chamber are separate chambers which are not directly in fluid communication with each other.

Optionally the second chamber is attached to the back panel of the first chamber.

Optionally the second chamber is, when inflated, substantially ring shaped, and optionally the second chamber has a firehose construction, the firehose construction comprising substantially fluid tight ring surrounded by a woven sheaf.

Optionally the second chamber is substantially non-porous or comprises a substantially non-porous coating.

Optionally the second chamber is a one piece woven cushion.

Optionally the inflator comprises a first and second inflator for inflating each of the first and second chambers respectively, optionally further comprising a reservoir containing a gas or incompressible fluid for inflating the second chamber.

Optionally further comprising a control module to control deployment of the air bag assembly and determine when to inflate each of the chambers.

Optionally further comprising a stiffening structure to reinforce the second chamber.

Optionally the at least one inflator is actuated using a trigger circuit connected to the at least one inflator, optionally the trigger circuit is connected to the inflator with a wire, wherein the wire sewn into the cushion arrangement.

Another aspect of the invention requires a steering wheel arrangement comprising: a steering wheel rim, wherein the steering wheel rim is non-annular having at least one gap; and a housing containing an air-bag assembly, wherein the localised support provided by the second chamber in the deployed configuration bridges the at least one gap in the rim of the steering wheel.

Another aspect of the invention comprises a vehicle comprising an air-bag, a steering wheel; and a control system, wherein the control system is operable to activate the at least one inflator to deploy the air-bag arrangement, and wherein when the air-bag arrangement is deployed in the deployed configuration, the steering wheel rim provides a reaction force support surface adjacent to the back panel of the first chamber and the second chamber is located in, or in the region of, a gap of support provided by the steering wheel rim.

Optionally the control system further comprises an occupant monitoring system that detects if an occupant is out of position and adjusts the deployment time of the second chamber relative to the first chamber.

Another aspect comprises a method of deploying an air-bag, wherein the second chamber is inflated by the at least one inflator more quickly compared with the first chamber; and inflation of the second chamber by the at least one inflator is delayed.

Optionally deployment of the second chamber is delayed when the occupant monitoring system detects that an occupant is out of position, or the second chamber is not deployed.

In order for an air-bag cushion to be deployed and remain in an optimal position relative to the passenger it is necessary for the air-bag to be supported. Typically the support it provided by the rim of a steering wheel. The assembly supplements the support provided by a non-annular steering wheel, having a gap in the rim, so that the air-bag is supported in all directions. As will be understood, the second chamber will need to be stiffer than the first chamber to provide support to the first chamber. The stiffness may be provided through the pressure of inflation, and/or the materials in the second chamber arrangement. The second chamber bridges the gap in the steering wheel rim by providing localised support across the gap region.

The first and second chambers are fluidly separate from each other to prevent 'leakage' between the chambers and thus a change in pressure. This also has the advantage that the chambers may be independently inflated and controlled, dependent on need.

However, to ensure that the second chamber is maintained in the correct position, it may be attached to or adjacent to the first chamber. Typically, the second chamber will be attached to the back panel of the first chamber.

In some arrangements, when stored, the second chamber is folded and packed to the outside of the first chamber relative to the housing. Thus, when the cushion arrangement is deployed, risk of the second chamber becoming pinched or trapped between the first chamber and the housing is minimised.

Further, the second chamber may have a 'firehose' construction, i.e. a rubber tubing, that is substantially fluid tight, surrounded by a woven sheaf for strength and durability. Alternatively, the second chamber may be made from a silicone coated fabric and where the seams have been sealed with silicone. Or the second chamber may be made using a one piece woven cushion construction. Thus, compared with the first chamber which comprises a conventional air-bag construction, when inflated the second chamber will maintain its internal pressure over a period of time compared with the first chamber.

The assembly may comprise a single inflator for inflating each of the chambers at the required time, or the assembly may comprise a respective inflator for each of the chambers. Thus, inflation of each of the chambers may be independently controlled and each of the chambers can be inflated according to the requirements for the respective chambers.

The arrangement may usefully be installed in a vehicle as a driver air-bag. When installed in a vehicle, where a driver is sitting out of a normal driving position, according to a driver monitoring system, the first chamber cushion may be inadvertently directed into a missing rim portion by the impact of the driver. Accordingly, the first chamber may be prevented from slipping through the missing rim segments before the second chamber is deployed either passively or actively. To passively prevent the first chamber from slipping, the control system may delay in activating inflation the second chamber relative to the first chamber. In an active system the control system determines whether or not to deploy the second chamber.

### Brief description of the drawings

Non-limiting and non-exhaustive embodiments of the disclosure are described, including various embodiments of the disclosure with reference to the figures, in which:
Figure 1 shows a non-circular steering wheel;
Figure 2 shows a non-circular steering wheel with support region indication;
Figure 3 shows a front view according to an embodiment:
Figure 4 shows a rear view according to an embodiment;
Figure 5 shows a side view according to an embodiment;
Figure 6 shows a stored arrangement of an embodiment;
Figure 7 shows a sectional view of a stored arrangement of an embodiment;
Figures 8a-8e show an arrangement as it is deployed;
Figure 9 shows a disc inflator detail;
Figure 10 shows a schematic diagram of an embodiment;
Figure 11 shows a side view of an embodiment;
Figure 12 shows a rear view according to an embodiment;
Figure 13 shows a inflator detail; and
Figure 14 shows a stiffening structure.

### Description of Invention

A detailed description of apparatus, systems, and methods consistent with various embodiments of the present disclosure is provided below. While several embodiments are described, it should be understood that the disclosure is not limited to any of the specific embodiments disclosed, but instead encompasses numerous alternatives, modifications, and equivalents. In addition, while numerous specific details are set forth in the following description in order to provide a thorough understanding of the embodiments disclosed herein, some embodiments can be practiced without some or all of these details. Moreover, for the purpose of clarity, certain technical material that is known in the related art has not been described in detail in order to avoid unnecessarily obscuring the disclosure.

In the specification terms such as 'vertical', 'horizontal', 'upwards', 'dowards', 'away from', 'towards', 'above', and 'below' refer to the components relative to their position when installed. It should be understood that these refer to the components when they are installed in the manner described and depicted herein, and not in any other orientation.

The term 'localised' in the context of localised support provided by the second chamber refers to support near to, across or proximate to another feature in a specific region. For example, where support is provided across a gap in a steering wheel, localised support extends across the gap and over the free ends of the steering wheel for a relatively short distance in order to bridge the gap. In this case the second chamber may extend radially beyond the gap by only a short distance. The short distance is relative to the circumference of the steering wheel or if the gap is considered an arc suspended by an angle from the centre of the steering wheel, the localised support covers an arc suspended by a slightly larger angle from the centre of the steering wheel at a similar radius. For instance, the second chamber may occupy a circumferential range, with respect to the steering wheel, which is approximately the same as, or only slightly larger than, the circumferential extent of the gap itself. Moreover, the second chamber may extend from a point at or near the centre of the steering wheel in the direction of the gap, to provide the localised support, and extend by a much shorter distance, or not at all, in other directions from this point. Further, the localised support may be at a similar radius from the centre of a steering wheel as the rim of the steering wheel or at a slightly larger or smaller radius than the rim of the steering wheel. Generally the scale of relative sizes is compared with the size of a conventional steering wheel and the size of a conventional air-bag.

The air-bag assemblies described herein may be applied to any type of non-circular steering wheel, or any steering wheel that does not provide a fully circular supportive rim.

The apparatus, methods and systems described herein relating to air-bag cushion assemblies are configured to support the first or primary driver steering wheel air-bag cushion with a second or secondary air-bag cushion. For example, certain preferred embodiments may be configured for use in connection with steering wheels lacking a support section in a particular area, such as a lack of rim portion.

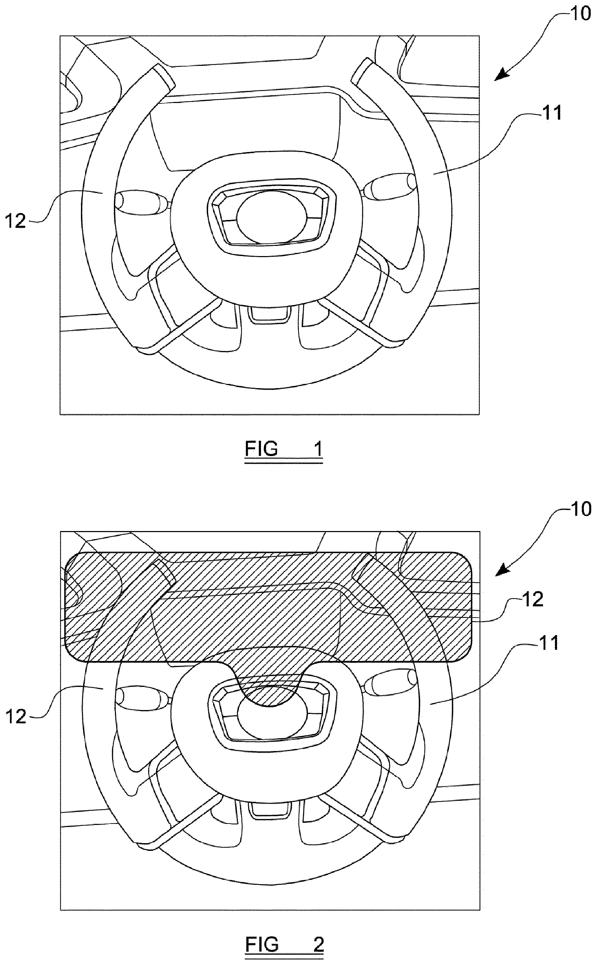

Figure 1 shows an example of a non-annular steering wheel 10. The steering wheel 10 has two laterally spaced side arches 11, 12, suitable for the driver's right and left hands. However, the steering wheel lacks an upper rim portion. Further, a lower rim portion is set back from the two side arches, and has a slightly smaller radius compared with the lateral side arches. Accordingly, the steering wheel does not provide a complete annular rim i.e. the steering wheel is non-circular. If an air-bag cushion were to be deployed, there would be 'gaps' in the reaction force support surface provided by the steering wheel rim.

For example, the region 13 shown in figure 2 indicates where additional localised support may be required for an air-bag cushion deployed from the wheel hub of the non-circular steering wheel.

According to one embodiment, additional localised support may be provided using a second chamber 14.

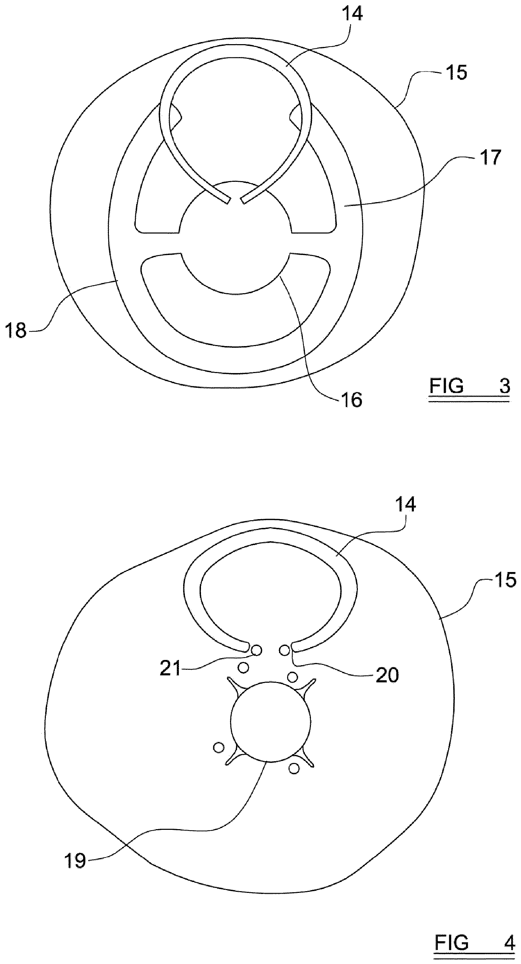

Figure 3 is a front view of a deployed or inflated air-bag cushion assembly. The features which are 'behind' a first cushion chamber 15 are shown as if the first cushion chamber were transparent.

The cushion arrangement is deployed from the wheel hub 16 at the centre of the steering wheel 17. The first cushion 15 has been inflated and extends laterally outwardly beyond the rim 18 of the steering wheel 17. The first cushion 15 may take any suitable shape, and in figure 3 is shown as being approximately spherical. After deployment the first cushion 15 remains attached to the steering wheel 17 at the hub 16.

The cushion arrangement comprises a second chamber 14 which is located adjacent to the first chamber 15. The second chamber 14 comprises a substantially ring shaped tube which is adjacent to the back panel of the first chamber 15 and attached to the wheel hub 16, proximal but slightly above the location where the first chamber 15. The second chamber 14 extends from the attachment point towards the gap in the upper portion of the steering wheel rim 18. The diameter of the second chamber ring 14 is slightly larger than the gap in the steering wheel rim 18 so that the sides of the ring overlap the ends of the lateral arches of the steering wheel 17. Thus, the second chamber ring 14 'bridges' the gap between the free ends of the arches of the steering wheel 17. Thus, together with the rim 18 of the steering wheel, the second chamber ring 14 provides a reaction force support surface in all directions for the first chamber 15 of the air-bag.

Figure 4 is a back view of the cushion arrangement. The first chamber 15 is again shown as an approximately spherical shape. At the centre of the first chamber 15 is an opening 19 which attaches to the steering wheel hub 18 (not shown). Above the first chamber opening 19 is the attachment point of the second chamber 14. The second chamber 14 is shown as a broken ring which extends from the attachment point to the approximately the top edge of the first chamber 15. A first end 20 of the second chamber is closed. The second end 21 of the second chamber 14 is open for attachment to an inflator.

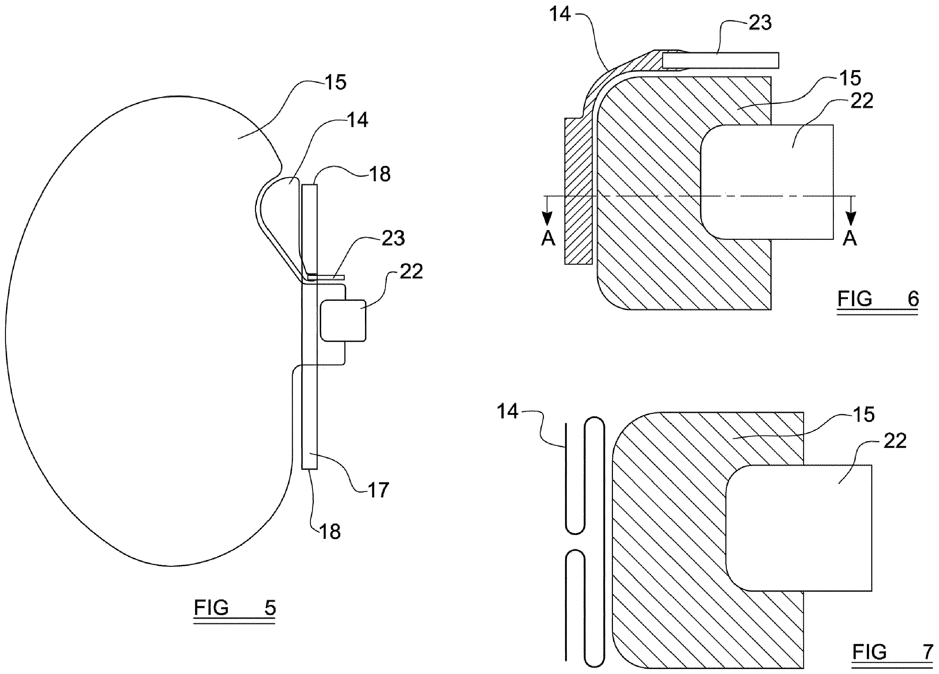

Figure 5 is a side view of a diagrammatic illustration of an arrangement of the first and second chambers of the cushion arrangement when the air-bag has been inflated. In this arrangement the second chamber comprises a different shape compared with the embodiment shown in figures 3 and 4.

The first chamber 15 is inflated and extends from the steering wheel 17 towards where a driver would be sitting. The edges of the first chamber extend above and below the rim 18 of the steering wheel 17.

The second chamber 14 is inflated and is located adjacent to the first chamber 15. The second chamber 14 is between the first chamber 15 and the upper portion of the steering wheel 17. The upper edge of the second chamber 14 extends slightly above the upper edge of the steering wheel 17.

In the arrangement shown in figure 5, in the event of a horizontal force on the first chamber 15, directed towards the steering wheel 17, the first chamber 15 is supported by the lower and side edges or rim of the steering wheel 17 and the second chamber 14.

Also shown in figure 5 are a first inflator 22 and a second inflator 23. The first inflator 22 is in fluid communication with the first chamber 15, and the second inflator 23 is in fluid communication with the second chamber 14. The first chamber 15 and the second chamber 14 are not in fluid communication with each other i.e. they are separate chambers. Thus, the first chamber 15 and the second chamber 14 may be separately inflated by their respective inflators 22, 23.

Prior to deployment of the air-bag cushion arrangement, the first and second chambers 15, 14 are stored in the steering wheel hub 16. Figures 6 and 7 illustrate a diagrammatic view of the cushion arrangement before it is deployed or inflated. Figure 7 is a cross-sectional view taken through A-A of figure 6.

In figure 6 the first chamber 15 is attached to a first or main inflator 22, and the second chamber 14 is attached to a second inflator 23. The second chamber 14 is located adjacent to the first chamber 15. The first chamber 15 is folded so that it is compact compared to when it is inflated (the folds are not shown for clarity). The second chamber 14 is folded so that it is compact compared to when it is inflated, also. Further the second chamber 14 is positioned on the outside of the first chamber 15 to ensure that the second chamber 14 does not become trapped between the housing and the first chamber 15 when the cushion arrangement is deployed.

In the cross-sectional view shown in figure 7, a Z-S fold arrangement of the second chamber 14 is illustrated, with the second chamber 15 to the front of the first chamber 15. This is just one of many possible fold configurations for easy deployment of the cushion arrangement. For simplicity only a part of the second chamber 14 is shown. The fold arrangement of the first chamber 15 is not shown.

The cushion arrangement is deployed and inflated by activating each of the inflators 22, 23.

In the embodiment described, the second chamber 14 is attached to the back panel of the first chamber 15 to ensure that the second chamber is in the correct position between the first chamber 15 and the steering wheel 17 when deployed.

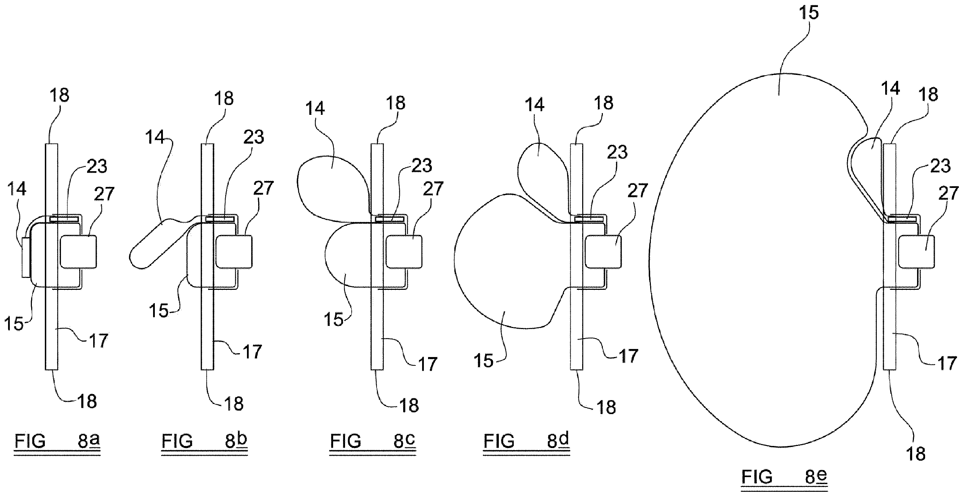

Figures 8a - 8e schematically illustrate the cushion arrangement as it is deployed. Figure 8a shows similar features as figure 6. However, in addition figure 8a shows the steering wheel 17 and rim 18. In figure 8a the cushion arrangement is packed in the hub of the steering wheel before the inflators 22, 23 have been triggered, for simplicity the first chamber 15 and the second chamber 14 are shown without the hub housing. Similarly to figure 6, the second chamber 14 is smaller than the first chamber 15 and located adjacent to the outer side of the first chamber 15.

In figure 8b inflator 23 has been triggered and the second chamber 14 has begun to inflate. As the second chamber 14 inflates it extends away from the steering wheel 17 and in an upward direction.

In figure 8c inflator 22 has been triggered and the first chamber 15 begins to inflate. Simultaneously the second chamber 14 continues to inflate. At this stage the volume of the first chamber 15 has only increased slightly compared with the packed configuration. The increase in volume of the first chamber 15 assists in pushing the second chamber 14 in an upward direction towards a gap in the steering wheel rim 18. At this stage the volume of the second chamber 14 may be close to its maximum.

In figure 8d, as the first chamber 15 continues to inflate and increase in volume, the second chamber 14 is wedged or trapped between the first chamber 15 and the steering wheel 17. At this point the second chamber 14 will be bridging a gap in the steering wheel rim 18. Also, the second chamber 14 is beginning to support the first chamber 15 on the upper section of the back panel of the first chamber 15.

Figure 8e shows the cushion arrangement fully deployed similarly to figure 5. The first chamber 15 is inflated and extends from the steering wheel 17 towards where a driver would be sitting. The edges of the first chamber extend above and below the rim 18 of the steering wheel 17.

The second chamber 14 is inflated and is located adjacent to the first chamber 15. The second chamber 14 is between the first chamber 15 and the upper portion of the steering wheel 17. The second chamber 14 has been slightly deformed in shape compared with the shape shown in figure 8c and 8d due to the full inflation of the first chamber 15. The upper edge of the second chamber 14 extends slightly above the upper edge of the steering wheel 17. The lower section of the first chamber 15 is supported by the lower and side edges or rim 18 of the steering wheel 17 and the upper section of the first chamber 15 is supported by the second chamber 14.

Each of the inflators 22, 23 may be for example a micro gas generator (MGG). The MGG for each of the first and second chambers 15, 14 is positioned in the assembly housing in the steering wheel hub 16 and is fluidly connected to their respective chambers 15, 14. The MGG may be triggered or activated by a control circuit (e.g. via a wire connection). When triggered, the MGG produces a gas to inflate the cushion chambers 15, 14. The trigger circuit is connected to the inflator by a wire, and the wire may be located inside or outside of the first chamber. Further, the wire may be secured by sewing the wire, or otherwise attaching the wire (for instance, by incorporating it as part of the weaving process), to the fabric of the cushion to ensure it is properly located. Typically a MGG inflator is a low volume inflator, therefore, another type of inflator may be more suitable for the first chamber 15.

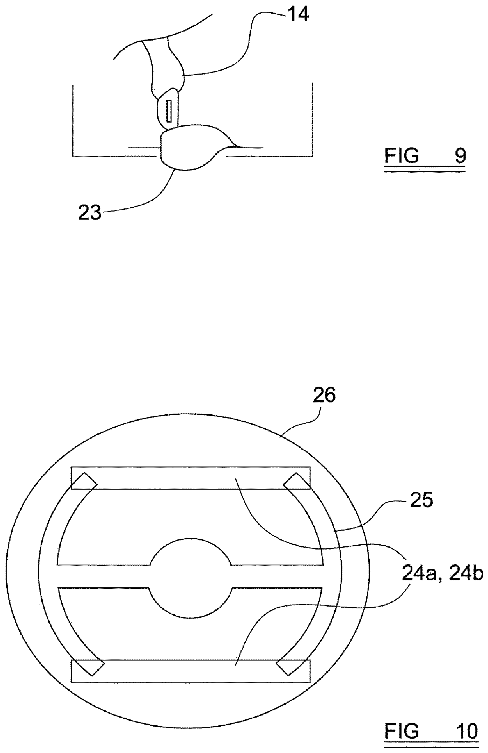

Figure 9 shows a detail of an inflator disc 23 attached to the second chamber 14. The inflator disc 23 is located within the housing for the air-bag arrangement and may be attached to a trigger circuit (not shown). The inflator disc 23 is coupled to an opening in the second chamber 14. Thus, when the inflator disc 23 is triggered the second chamber 14 is inflated.

The second inflator 23 or MGG is preferably able to deploy the second chamber 14 very quickly. Typically the first chamber 15 will be deployed in about 20ms and the second chamber 14 will be deployed in less than half this time, before the first chamber 15 is inflated and is initially interaction with the steering wheel 17. The quick deployment of the second chamber 14 is helped by the fact that the capacity of the second chamber 14 will be significantly less than that of the first chamber 15. The second chamber 14 is also preferably inflated to a higher pressure than the first chamber 15.

In preferred embodiments, the second chamber 14 is fully or substantially fully inflated while the first chamber 15 is still substantially uninflated. This means that, as the first chamber 15 inflates, it can be guided into the correct position by the structural support provided by the second chamber 14. The second chamber 14 is inflated by the time a driver loads the first chamber 15, when the driver is in a normal position. As the second chamber 14 is inflated very quickly, the trigger time compared with the trigger for inflating the first chamber 15 may be delayed.

In an alternative arrangement, both chambers 15, 14 may be inflated by the same inflator. In this case, the coupling between the inflator and the first chamber 15 and between the inflator and the second chamber 14 would be controlled to inflate the chambers at the appropriate time and to the correct pressure. For example, the first and second chambers 15, 14 may have a connecting passage or aperture therebetween, which is initially sealed, but which will open when subjected to sufficiently high pressure. For instance, a flap of fabric held in place by a tear seam may initially seal off the aperture. Gas from the inflator is directed into the second chamber 14. Once the second chamber 14 is fully or substantially fully inflated, the tear seam ruptures and a passage is opened into the first chamber 15, which then inflates. Alternatively, in place of a tear seam, a one way vent between the second chamber 14 and the first chamber 15 could be provided to ensure that the pressure in the second chamber 14 is maintained.

In another embodiment, the second chamber 24 may comprise one or more baton shaped cells. For example, as illustrated in figure 10, a steering wheel 25 may be missing upper and lower portions of its rim. An upper baton 24a and a lower baton 24b may be used to bridge the gaps between the laterally spaced arches of the steering wheel 15 to support the first chamber 26. In the example shown in figure 10, the batons 24a, 24b are generally straight, but in other examples they may take other forms. For instance, the batons 24a, 24b may be curved, for instance in such a way that they generally follow the curvature of the existing portions of the rim of the steering wheel 25. The rim and the batons 24a, 24b will therefore together form a circular or substantially circular shape. One benefit of this is that existing designs of driver air-bags, which have been designed to rely on the presence of a steering wheel rim which takes the form of a complete circle, may be used with little or no further adaptation, and will inflate in the intended manner.

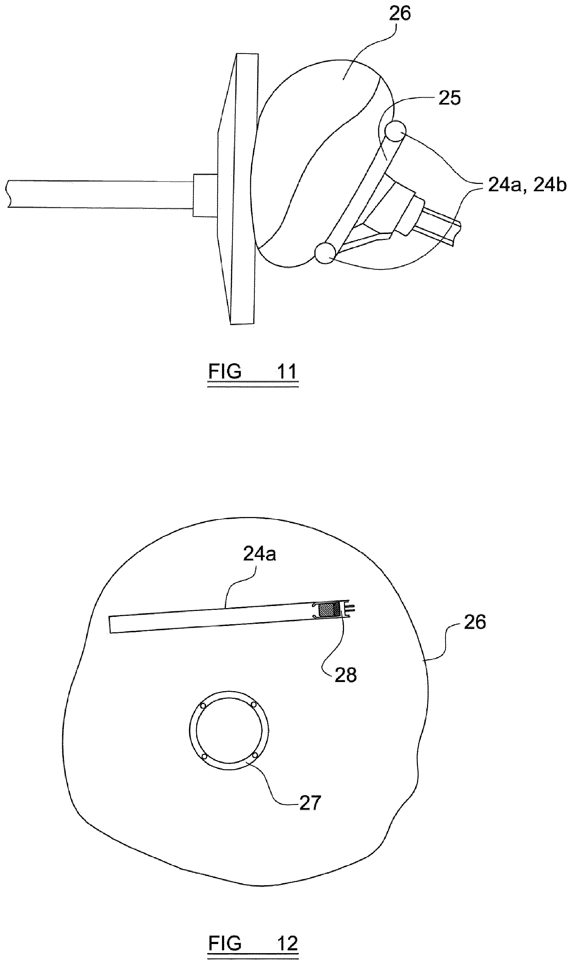

Figure 11 illustrates a side view of a deployed cushion arrangement according to the embodiment illustrated in figure 10. The upper and lower baton-shaped second chambers 24a, 24b are shown along the upper and lower edges of the steering wheel 15. Thus, the upper and lower second chambers 24a, 24b are bridging the upper and lower gaps in the steering wheel rim 25 respectively. The first chamber 26 is in front of the steering wheel 25 and a horizontal force is applied to the front surface of the first chamber 26 to simulate loading by a driver. The first chamber 26 is supported by the upper and lower second chamber batons 24a, 24b and the steering wheel rim 25.

Figure 12 is a back view of the cushion arrangement, when inflated, described in connection with figures 10 and 11. For simplicity only the upper baton second chamber 24a is shown. The first chamber 26 is, in this example, approximately circular when viewed from the rear. At the centre of the first chamber is an opening 27 for connection to an inflator (not shown) located in the steering wheel hub housing (not shown). The second chamber 24a is located above the connection point of the first chamber 26. The second chamber 24a extends horizontally across a portion of the first chamber 26. The second chamber 24 has the shape of a tube. One end of the second chamber is enclosed. The other end of the second chamber is attached to an inflator 28.

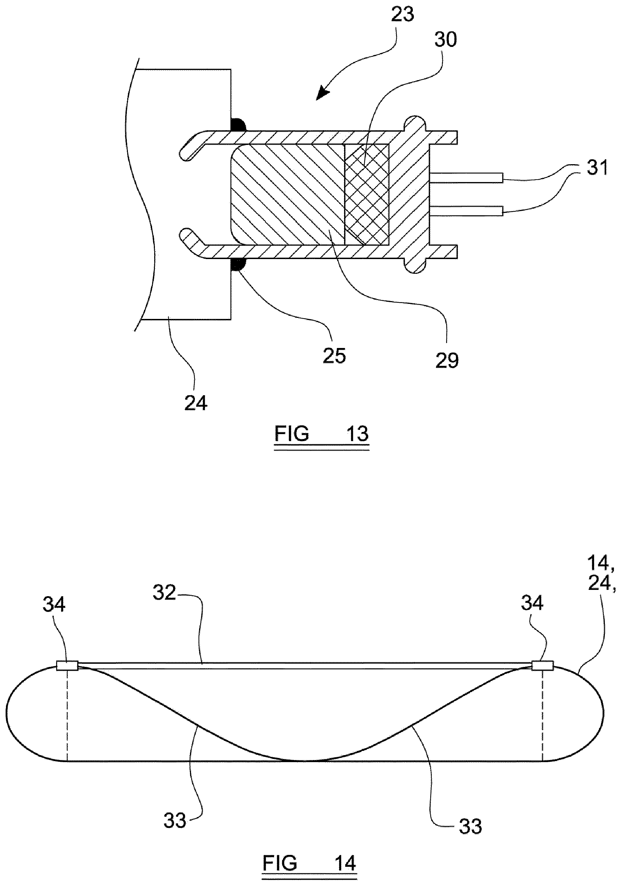

A detail of the second chamber inflator 28 is shown in figure 13. The inflator 28 is attached to an opening in the cushion chamber 24 and is sealed with a seal 25 capable of withstanding high pressure so that the chamber 24 does not become detached from the inflator 28 when the inflator 28 is activated.

The inflator 28 houses a piston 29 and a propellant charge 30. Opposite where the inflator 28 is attached to the cushion chamber are two pins 31. These may be attached to a wire to trigger activation of the inflator 28. When the propellant charge 30 is fired via triggering by an attached wire, the piston 29 moves towards the cushion chamber 24. The piston 29 is held within the inflator 28 housing by lips in the inflator housing.

The second chamber 24 may be filled with an incompressible or substantially incompressible fluid. When the piston 29 moves towards the second chamber 24 the volume of the second chamber 24 is reduced. Thus, the pressure inside the second chamber 24 increases and the second chamber 24 becomes stiff. In such an embodiment, the assembly may further comprises a fluid reservoir for maintaining the fluid in the second chamber 24.

In some embodiments, the second chamber 24 may be stiffened with a stiffening structure such as that shown in figure 13. The stiffening structure comprises a push rod 32 and pull elements 33. The push rod 32 is attached to the second chamber 24 proximate to each end of the second chamber 24, and extends along substantially the entire length of the second chamber 24, while the pull elements 33 encircle the second chamber 24. The push rod 32 may be made from a resilient material. For example, the push rod 32 may be made from shape-memory metal alloy or a plastic material. In a stored configuration the rod 32 is folded with the second chamber 24. When the second chamber 24 is deployed from the cushion assembly housing, the rod 32 extends to reinforcing configuration. For example, if the push rod 32 is made from a shape-memory metal alloy, in the housing the rod 32 will be folded out of its preferred shape. Once the push rod 32 is released from the housing the rod 32 will 'push' into its preferred shape. Similarly, the rod 32 will 'push' into shale if the rod 32 is made from another material. The rod 32 may have directional strength properties in order to reinforce the shape of the second chamber 24, for example, the rod 32 may be stiff when lateral forces are applied but readily fold when longitudinal forces are applied. Thus, the rod 32 will provide stiffening when loaded by the first chamber cushion. The pull elements 33 may be made of a tape or strap material which have strength under tension but do not maintain their shape when no force is applied. The pull elements 33 may easily be folded and stored with the second chamber 24. With the stiffening structure or reinforcement provided by the push rod 32 and pull elements 33, even if the second chamber 24 deflates slightly or loses internal pressure, the shape of the second chamber 24 will be maintained to provide a supporting bridge for one or more gaps in the support provided by a steering wheel rim.

The second chamber 14, 24 may have a 'firehose' type construction. Referring to figure 4, the second chamber 14 has an external perimeter and an internal tube depicted with broken lines. For example, the firehose construction may comprises a two layer tube. The internal layer may comprise a non-porous or substantially non-porous flexible tube such as rubber, while the external layer may comprises a woven fabric structure.

In some arrangements, the second chamber 14, 24 may be attached to the back panel of the first chamber 15, 26 to ensure that the second chamber 14, 24 is deployed in the correct position relative to the first chamber 15 and the steering wheel 17, 25. For example, the second chamber 14, 24 may be sewn to the first chamber 15, 26.

It is required that the second chamber maintains a higher pressure over a period of time to ensure that the second chamber provides a support surface. In contrast, the first chamber may be inflated to a lower pressure and may be inflated rapidly. Overall the first chamber will be inflated for a shorter period of time than the second chamber. Accordingly, the second chamber may be made from a coated fabric, for instance where the fabric coating contains a high silicone content. The seams of the second chamber may be sealed with silicone or another suitable sealant. Further, joints between the second chamber and the inflator may be sealed with silicone or another suitable sealant. Alternatively, the second chamber may be constructed as a one piece woven cushion.

Deployment of the air-bag cushion assembly is controlled by a control module. The control module may determine when to deploy the cushion arrangement and when to trigger the inflator(s). For example, the air-bag assembly may be deployed when a collision is detected. The first and second chambers are inflated. The second chamber may be inflated very rapidly and to a high pressure compared with the first chamber. The pressure in the second chamber is maintained for a period of time. Whereas the first chamber is inflated more slowly (due to its much larger size) and deflates relatively shortly after it is deployed, because gas within the first chamber is allowed to escape through the porosity of the first chamber and/or venting of the first chamber.

The control module may further comprise an occupant monitoring system. The control module stores a defined range of 'normal' occupant positions. When it is detected that the occupant is out of position, i.e. outside the 'normal' range of positions, the control module may adjust deployment of the cushion arrangement. For example, if it is detected that the occupant is leaning forwardly in the driving seat, there may be delay before the second chamber is deployed, or the second chamber may not be deployed at all, since less robust support for the first chamber may be desirable in this situation.

As will be apparent, a combination of one or more second chamber cushions and second chamber cushions may be used to provide support to the first chamber cushion. The precise arrangement of second chamber cushions will depend on the shape of the steering wheel and the support required for the particular application of the invention.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag assembly comprising:
an air-bag arrangement movable from a stored configuration to a deployed configuration, the air-bag arrangement comprising a first chamber (15, 26) and a second chamber (14, 24a, 24b), the second chamber (14, 24a, 24b) being positioned adjacent to, or attached to, the first chamber (15, 26) and located to provide localised support to the first chamber (15, 26), wherein, when in the stored configuration, the second chamber (14, 24a, 24b) is folded outside of the first chamber (15, 26); and
at least one inflator (22, 23) coupled to the air-bag arrangement, wherein the at least one inflator (22, 23) is configured to inflate the air-bag arrangement when activated, and
when in the inflated configuration, the second chamber (14, 24a, 24b) is located against a back panel of the first chamber (15, 26) to provide a reaction force surface to assist in maintaining the first chamber (15, 26) in a desired position while the first chamber (15, 26) is deployed.

2. An air-bag assembly according to any preceding claim,
wherein the first chamber (15, 26) and the second chamber (14, 24a, 24b) are separate chambers which are not directly in fluid communication with each other.

3. An air-bag assembly according to any preceding claim,
wherein the second chamber (14, 24a, 24b) is attached to the back panel of the first chamber (15, 26).

4. An air-bag assembly according to any preceding claim,
wherein the second chamber (14, 24a, 24b) is, when inflated, substantially ring shaped, optionally
wherein the second chamber (14, 24a, 24b) has a firehose construction, the firehose construction comprising a substantially fluid tight ring surrounded by a woven sheaf.

5. An air-bag assembly according to any preceding claim,
wherein the second chamber (14, 24a, 24b) is substantially non-porous or comprises a substantially non-porous coating.

6. An air-bag assembly according to any preceding claim,
wherein the second chamber (14, 24a, 24b) is a one piece woven cushion.

7. An air-bag assembly according to any preceding claim,
wherein the inflator (22, 23) comprises a first (22) and second (23) inflator for inflating each of the first (15, 26) and second (14, 24a, 24b) chambers respectively, optionally further comprising a reservoir containing a gas or incompressible fluid for inflating the second chamber (14, 24a, 24b).

8. An air-bag assembly according to any preceding claim,
further comprising a control module to control deployment of the air-bag assembly and determine when to inflate each of the chambers (15, 14, 26, 24a, 24b).

9. An air-bag assembly according to any preceding claim,
further comprising a stiffening structure (32, 33, 34) to reinforce the second chamber (14, 24a, 24b).

10. An air-bag assembly according to any preceding claim,
wherein the at least one inflator (22, 23) is actuated using a trigger circuit connected to the at least one inflator, optionally
wherein the trigger circuit is connected to the inflator with a wire, wherein the wire sewn into the cushion arrangement.

11. A steering wheel (10, 17, 25) arrangement comprising:
a steering wheel rim (11, 12, 18), wherein the steering wheel rim (11, 12, 18) is non-annular having at least one gap (13); and
a housing containing an air-bag assembly according to any preceding claim, wherein the localised support provided by the second chamber (14, 24a, 24b) in the deployed configuration bridges the at least one gap (13) in the rim (11, 12, 18) of the steering wheel (10, 17, 25).

12. A vehicle comprising an air-bag assembly according to any of claims 1 to 10, further comprising a steering wheel (10, 17, 25) according to claim 11; and
a control system, wherein the control system is operable to activate the at least one inflator (22, 23) to deploy the air-bag arrangement, and
wherein when the air-bag arrangement is deployed in the deployed configuration, the steering wheel rim (11, 12, 18) provides a reaction force support surface adjacent to the back panel of the first chamber (15, 26) and the second chamber (14, 24a, 24b) is located in, or in the region of, a gap (13) of support provided by the steering wheel rim (11, 12, 18).

13. A vehicle according to claim 12,
wherein the control system further comprises an occupant monitoring system that detects if an occupant is out of position and adjusts the deployment time of the second chamber (14, 24a, 24b) relative to the first chamber (15, 26).

14. A method of deploying an air-bag of an air-bag assembly according to any preceding claim, wherein the second chamber (14, 24a, 24b) is inflated by the at least one inflator (22, 23) more quickly compared with the first chamber (15, 26); and
inflation of the second chamber (14, 24a, 24b) by the at least one inflator (22, 23) is delayed.

15. A method according to claim 14, wherein deployment of the second chamber (14, 24a, 24b) is delayed when the occupant monitoring system detects that an occupant is out of position, or the second chamber (14, 24a, 24b) is not deployed.

## Patentansprüche

1. Airbaganordnung, umfassend:
eine Airbaganordnung, die von einer gelagerten Konfiguration zu einer entfalteten Konfiguration bewegbar ist, wobei die Airbaganordnung eine erste Kammer und eine zweite Kammer umfasst, wobei die zweite Kammer benachbart zu der ersten Kammer positioniert oder an dieser angebracht ist und gelegen ist, um eine lokalisierte Stütze für die erste Kammer bereitzustellen, wobei die zweite Kammer, wenn sie in der gelagerten Konfiguration ist, außerhalb der ersten Kammer gefaltet ist; und
mindestens eine mit der Airbaganordnung gekoppelte Aufblasvorrichtung, wobei die mindestens eine Aufblasvorrichtung konfiguriert ist, um die Airbaganordnung aufzublasen, wenn sie aktiviert ist, und
wenn sie in der aufgeblasenen Konfiguration ist, die zweite Kammer gegen eine Rückwand der ersten Kammer gelegen ist, um eine Reaktionskraftoberfläche bereitzustellen, um dazu beizutragen, die erste Kammer in einer gewünschten Position zu halten, während die erste Kammer entfaltet ist.

2. Airbaganordnung nach einem der vorhergehenden Ansprüche,
wobei die erste Kammer und die zweite Kammer separate Kammern sind, die miteinander nicht direkt in Fluidverbindung stehen.

3. Airbaganordnung nach einem der vorhergehenden Ansprüche,
wobei die zweite Kammer an der Rückwand der ersten Kammer angebracht ist.

4. Airbaganordnung nach einem der vorhergehenden Ansprüche,
wobei die zweite Kammer, wenn sie aufgeblasen ist, im Wesentlichen ringförmig ist, optional wobei die zweite Kammer eine Löschschlauchkonstruktion aufweist, wobei die Löschschlauchkonstruktion einen im Wesentlichen fluiddichten Ring aufweist, der von einer gewebten Garbe umgeben ist.

5. Airbaganordnung nach einem der vorhergehenden Ansprüche,
wobei die zweite Kammer im Wesentlichen nicht porös ist oder eine im Wesentlichen nicht poröse Beschichtung umfasst.

6. Airbaganordnung nach einem der vorhergehenden Ansprüche,
wobei die zweite Kammer ein einstückiges, gewebtes Kissen ist.

7. Airbaganordnung nach einem der vorhergehenden Ansprüche,
wobei die Aufblasvorrichtung eine erste und eine zweite Aufblasvorrichtung zum Aufblasen der ersten beziehungsweise der zweiten Kammer umfasst, optional ferner ein Reservoir umfassend, das ein Gas oder ein inkompressibles Fluid zum Aufblasen der zweiten Kammer enthält.

8. Airbaganordnung nach einem der vorhergehenden Ansprüche,
ferner umfassend ein Steuermodul zum Steuern der Entfaltung der Airbaganordnung und zum Bestimmen, wann jede der Kammern aufzublasen ist.

9. Airbaganordnung nach einem der vorhergehenden Ansprüche,
ferner umfassend eine Versteifungsstruktur zum Verstärken der zweiten Kammer.

10. Airbaganordnung nach einem der vorhergehenden Ansprüche,
wobei die mindestens eine Aufblasvorrichtung unter Verwendung einer mit der mindestens einen Aufblasvorrichtung verbundenen Auslöseschaltung betätigt wird,
wobei die Auslöseschaltung mit der Aufblasvorrichtung über einen Draht verbunden ist, wobei der Draht in die Kissenanordnung eingenäht ist.

11. Lenkradanordnung, umfassend:
einen Lenkradkranz, wobei der Lenkradkranz nicht ringförmig ist und mindestens einen Spalt aufweist; und
ein Gehäuse, das eine Airbaganordnung nach einem der vorhergehenden Ansprüche enthält, wobei die von der zweiten Kammer in der entfalteten Konfiguration bereitgestellte, lokalisierte Stütze den mindestens einen Spalt in dem Krank des Lenkrades überbrückt.

12. Fahrzeug mit einer Airbaganordnung nach einem der Ansprüche 1 bis 10,
ferner umfassend ein Lenkrad nach Anspruch 11; und
ein Steuersystem, wobei das Steuersystem betrieben werden kann, um die mindestens eine Aufblasvorrichtung zum Entfalten der Airbaganordnung zu aktivieren, und
wobei, wenn die Airbaganordnung in der entfalteten Konfiguration entfaltet ist, der Lenkradkranz eine Reaktionskraftstützoberfläche benachbart zu der Rückwand der ersten Kammer bereitstellt und wobei die zweite Kammer in einer Stützspalte oder im Bereich dieser gelegen ist, die durch den Lenkradkranz bereitgestellt wird.

13. Fahrzeug nach Anspruch 12,
wobei das Steuersystem ferner ein Insassenüberwachungssystem umfasst, das erfasst, ob ein Insasse nicht in Position ist, und die Entfaltungszeit der zweiten Kammer relativ zu der ersten Kammer anpasst.

14. Verfahren zum Entfalten eines Airbags nach einem der vorhergehenden Ansprüche,
wobei die zweite Kammer von der mindestens einen Aufblasvorrichtung im Vergleich zu der ersten Kammer schneller aufgeblasen wird; und
wobei das Aufblasen der zweiten Kammer von der mindestens einen Aufblasvorrichtung verzögert wird.

15. Verfahren nach Anspruch 14, wenn abhängig von Anspruch 13,
wobei die Entfaltung der zweiten Kammer verzögert wird, wenn das Insassenüberwachungssystem erfasst, dass ein Insasse nicht in Position ist oder die zweite Kammer nicht entfaltet ist.

## Revendications

1. Ensemble coussin gonflable comprenant :
un agencement de coussin gonflable pouvant se déplacer d'une configuration de rangement vers une configuration déployée, l'agencement de coussin gonflable comprenant une première chambre et une seconde chambre, la seconde chambre étant positionnée de manière adjacente ou attachée à la première chambre et disposée de manière à fournir un support localisé à la première chambre, la seconde chambre étant repliée à l'extérieur de la première chambre dans la configuration de rangement ; et
au moins un dispositif de gonflage connecté à l'ensemble coussin gonflable, l'au moins un dispositif de gonflage étant conçu pour gonfler l'ensemble coussin gonflable lorsqu'il est activé, et,
dans la configuration gonflée, la seconde chambre étant située contre un panneau arrière de la première chambre de manière à fournir une surface de force de réaction pour aider à maintenir la première chambre dans une position souhaitée pendant que la première chambre est déployée.

2. Ensemble coussin gonflable selon l'une des revendications précédentes,
dans lequel la première chambre et la seconde chambre sont des chambres séparées qui ne sont pas directement en communication fluidique l'une avec l'autre.

3. Ensemble coussin gonflable selon l'une des revendications précédentes,
dans lequel la seconde chambre est fixée au panneau arrière de la première chambre.

4. Ensemble coussin gonflable selon l'une des revendications précédentes,
dans lequel la seconde chambre est, lorsqu'elle est gonflée, sensiblement en forme d'anneau, la seconde chambre présentant éventuellement une structure de tuyau d'incendie, la structure de tuyau d'incendie comprenant un anneau étanche sensiblement fluide entouré d'un faisceau tissé.

5. Ensemble coussin gonflable selon l'une des revendications précédentes,
dans lequel la seconde chambre est sensiblement non poreuse ou comprend un revêtement sensiblement non poreux.

6. Ensemble coussin gonflable selon l'une des revendications précédentes,
dans lequel la seconde chambre est un coussin tissé d'une seule pièce.

7. Ensemble coussin gonflable selon l'une des revendications précédentes,
dans lequel le dispositif de gonflage comprend un premier et un second dispositif de gonflage permettant de gonfler respectivement chacune des première et seconde chambres, comprenant éventuellement en outre un réservoir contenant un gaz ou un fluide incompressible permettant de gonfler la seconde chambre.

8. Ensemble coussin gonflable selon l'une des revendications précédentes,
comprenant en outre un module de commande permettant de commander le déploiement de l'ensemble coussin gonflable et de déterminer à quel moment gonfler chacune des chambres.

9. Ensemble coussin gonflable selon l'une des revendications précédentes,
comprenant en outre une structure de renforcement destinée à renforcer la seconde chambre.

10. Ensemble coussin gonflable selon l'une des revendications précédentes,
dans lequel l'au moins un dispositif de gonflage est actionné à l'aide d'un circuit de déclenchement relié à l'au moins un dispositif de gonflage,
le circuit de déclenchement étant éventuellement relié au dispositif de gonflage au moyen d'un fil, le fil étant cousu dans l'agencement de coussin.

11. Ensemble volant de direction comprenant :
une jante de volant de direction, la jante de volant de direction n'étant pas annulaire et comportant au moins un interstice ; et
un boîtier contenant un ensemble coussin gonflable selon l'une des revendications précédentes, le support localisé fourni par la seconde chambre dans la configuration déployée comblant l'au moins un interstice dans la jante du volant de direction.

12. Véhicule comprenant un ensemble coussin gonflable selon l'une des revendications 1 à 10,
comprenant en outre un volant de direction selon la revendication 11 ; et
un système de commande, le système de commande pouvant être actionné pour activer l'au moins un dispositif de gonflage afin de déployer l'agencement de coussin gonflable, et, lorsque l'agencement de coussin gonflable est déployé dans la configuration déployée, la jante du volant de direction fournissant une surface de support de force de réaction adjacente au panneau arrière de la première chambre, et la seconde chambre est située dans, ou dans la région d'un interstice de support prévu dans la jante du volant de direction.

13. Véhicule selon la revendication 12,
dans lequel le système de commande comprend en outre un système de surveillance des occupants, qui détecte si un occupant est hors position et ajuste le temps de déploiement de la seconde chambre par rapport à la première chambre.

14. Procédé de déploiement d'un coussin gonflable selon l'une des revendications précédentes,
dans lequel la seconde chambre est gonflée par l'au moins un dispositif de gonflage plus rapidement que la première chambre ; et
le gonflage de la seconde chambre par l'au moins un dispositif de gonflage est retardé.

15. Procédé selon la revendication 14 lorsqu'elle dépend de la revendication 13,
dans lequel le déploiement de la seconde chambre est retardé lorsque le système de surveillance des occupants détecte qu'un occupant est hors position ou que la seconde chambre n'est pas déployée.
